# EUROPEAN PATENT SPECIFICATION

(11) **EP 4 662 053 B1**
(45) Date of publication and mention of the grant of the patent: **04.11.2026**
(21) Application number: 24703655.1
(22) Date of filing: 05.02.2024
(51) Int. Cl.: B29C 65/18, B65B 51/30, B65B 59/04

(54) **VERTICAL PACKAGING MACHINE**
VERTIKALE VERPACKUNGSMASCHINE
MACHINE D'EMBALLAGE VERTICALE

(30) Priority: 07.02.2023 IT 202300001947
(43) Date of publication of application: 17.12.2025
(73) Proprietor: Ilapak Italia S.p.A., 52045 Foiano Della Chiana (AR) (IT)
(72) Inventor: ROLLERI, Stefano, 52045 Foiano della Chiana (AR) (IT); MARINI, Paolo, 52045 Foiano della Chiana (AR) (IT)
(74) Representative: Paglia, Pietro
(86) International application number: PCT/IB2024/051017
(87) International publication number: WO 2024/165963

(56) References cited:
- WO-A1-2010/055591
- WO-A1-2019/077532
- JP-A- 2008 213 852

## Description

The present invention relates to a vertical packaging machine for the production of sealed bags containing products, mainly but not exclusively food products.

In the use of a vertical packaging machine, it is advantageous to be able to change bag format when requested, and it is important that change format can be carried out as much quickly as possible.

As it is well known, sealed bags usually available in supermarkets and containing various products, mainly foodstuffs, are produced by automatic machines called packaging machines.

There are various types of these packaging machines, including versions that are normally referred to as vertical packaging machines.

A vertical packaging machine generally comprises conveyors which direct a film of wrapping material from a feeding reel towards a forming tube vertically arranged. Hence the name vertical packaging machines. In these machines, the film is wrapped around a vertical forming tube and advances downwardly therearound by means of a drive system comprising rubber-coated belts and curved sheet metal parts, arranged around the forming tube.

Furthermore, during sliding over the forming tube, the film is longitudinally sealed by joining its longitudinal edges using a longitudinal sealing unit. Below said forming tube, transverse welding jaws of a transverse sealing unit are positioned to create a transverse seal to close the film during its advancement, thus creating what will be a bottom of the bag. The product generally passes in the forming tube, arriving at the bottom sealed bag, below the forming tube. Then, the bag is sealed by the same longitudinal transverse welding jaws that simultaneously seal the top of the filled bag and the bottom of the above following bag.

Coupled to the transverse sealing unit, often there are also transverse cutting means which separate the bags at the same time as creating the transverse seals.

Traditional sealing systems installed on the vertical packaging machine are based on the use of sealing bars heated by electrical resistors controlled by electronic devices that continuously monitor the temperature by means of dedicated sensors to supply the right power to the electrical resistors.

These sealing bars, which are generally installed at the front of the vertical packaging machine and below the forming tube, are moved by means of connecting rod-crank type mechanisms. In order to seal opposite walls of the bags, the sealing bars are moved near to each other with high temperature and pressure so that the layers of film can be sealed together.

Depending on the type of package to be made, transverse sealing unit with welding jaws of different arrangement and/or shape are required, resulting in the need for a change of sealing unit for different bag formats. This change of format of the bags often requires the intervention of dedicated personnel and can take quite a long time.

For the creation of some bag formats, for example, it may be necessary to arrange the welding jaws along a first transversal welding axis, while for other formats it may be necessary to arrange the welding jaws along a second transversal welding axis, rotated, for example, by 90° with respect to the first transversal welding axis. In still different configurations, the production of the bag may require the creation of folds on the body, which have been carried out by means of specific folding member.

The difficulty of performing a format change and the time required are therefore a problematic aspect in known solutions, and this strongly affect the flexibility of conventional vertical packaging machines.

The machines currently on the market, that are part of the state of the art, include solutions with means allowing angular rotation to vary the working arrangement by 90°, such as, for example, the one described in WO2019/077532, where modular welding means have the possibility of being positioned in two configurations, one rotated 90° with respect to the other by acting on a hinge and a locking system. JP 2008 213852 A discloses a similar arrangement with a single sealing device that can rotate 90°. Another device is disclosed by WO2010055591 A1 that represents a vertical packaging machine comprising two perpendicular sealing units that are fixed to the same platform.

It is therefore an object of the present invention to make available a vertical packaging machine equipped with means to streamline the change of format by using special mechanisms that allow the sealing means to be replaced by an alternative solution to that described in the prior art.

One aim of the present invention is to improve a vertical packaging machine to make it faster to remove some parts and assemble others.

A second aim of the present invention is to provide a vertical packaging machine configured to produce multiple bag formats, where format change operations are simplified.

A further aim of the present invention is to provide a vertical packaging machine in which format change operations have a reduced margin of error and require reduced operation time.

This is achieved by means of a vertical packaging machine equipped with means to make very simple the format change, according to claim 1 of the present invention.

The dependent claims of the present invention outline advantageous forms of realisation of the invention.

The invention may be better understood and implemented with reference to the accompanying drawings which illustrate an exemplified and nonlimiting embodiment in which:
- Figure 1 is a schematic view of a vertical packaging machine according to the invention;
- Figure 2 is a schematic view of a detail of the front of the vertical packaging machine according to the invention;
- Figure 3 is a schematic view of a detail of a first sealing unit of the packaging machine according to the invention;
- Figure 4a is a schematic view of a detail of the packaging machine according to the invention including a second sealing unit;
- Figure 4b is a schematic view of a detail of the packaging machine including the second sealing unit as in figure 4a from a different perspective;
- Figure 5 is a schematic view of a detail of the second sealing unit;
- Figure 6 is a partial view of the vertical packaging machine according to the present invention, in particular of the second sealing unit and a folding unit.

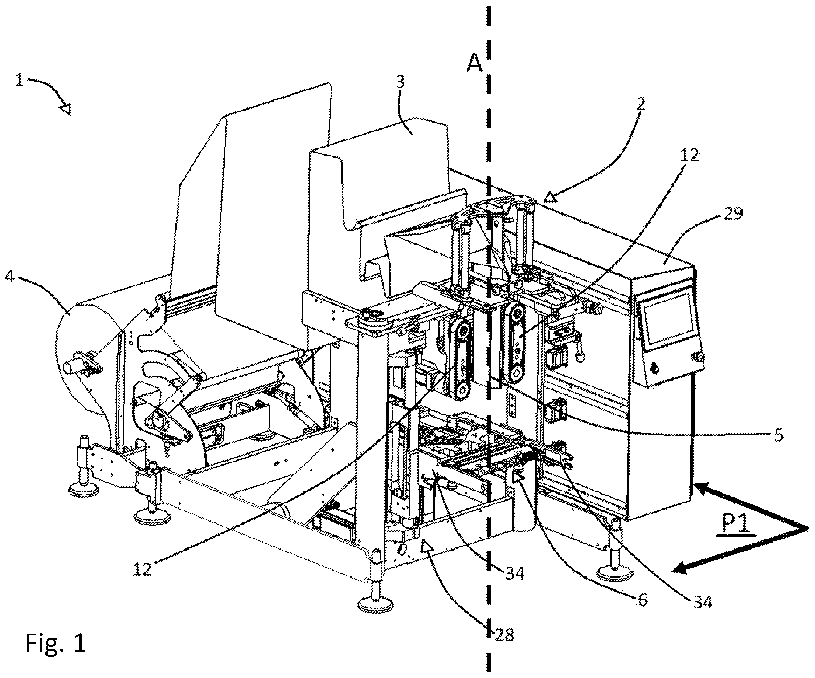

With reference to the annexed figures, and in particular to figure 1, with 1 it is generally indicated a vertical packaging machine. Conveying means 2 are arranged at the upper part of the machine 1 for conveying a film 3 coming from a feeding reel 4, which is placed in a rear part of the vertical packaging machine 1. The film has been fed towards a forming tube 5 having a development along a vertical feeding axis A. The forming tube 5 is a hollow, vertically positioned, tube within which the product to be packaged transits towards a forming area of the bag. The forming tube 5 is removably fixed to the machine 1 so that it can be disassembled to be replaced with another forming tube of a different shape.

The bags for the products to be packaged are generally made starting from the film 3 fed to the machine in the form of a continuous tape. This film 3 dispensed by the feeding reel 4 is conveyed by the conveying means 2 to the upper part of the machine 1 from which it reaches the upper end of the forming tube 5.

Adjacent to the forming tube 5, pulling means 12 are provided whose function is to slide downwards the film 3 on the forming tube 5. The sliding along the forming tube 5 takes place by means of friction between the pulling means 12 and the film 3 of packaging material. According to a configuration, said pulling means 12 can be at least partially made of rubber or another material with high friction to facilitate gripping on the film 3 of packaging material without slipping.

There are also longitudinal welding means (not shown in the figures) arranged along the forming tube 5 and configured to seal the film 3 along longitudinal edges to form a tubular film. The longitudinal edges prior to be sealed by the longitudinal welding means are approached and arranged near each other while being pulled along the forming tube 5 by said conveying means 2.

A first transverse sealing unit 6, arranged below said forming tube 5 is configured to receive said tubular film 3 which has been previously sealed along its longitudinal edges to perform a transverse seal on it. In this way, the bottom of the bag is formed before filling the bag.

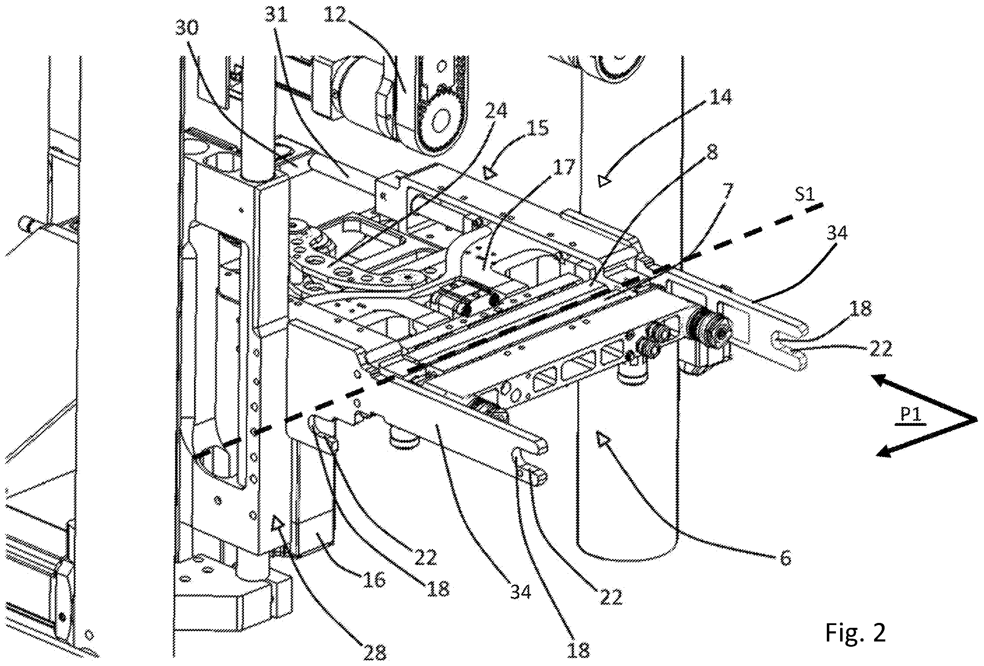

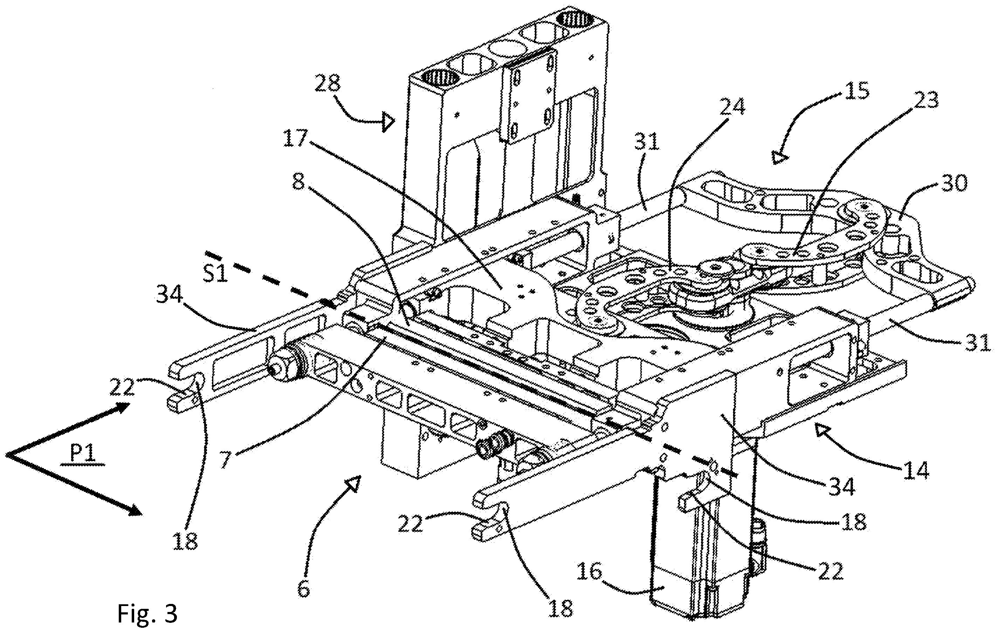

As can be seen in figures 2 and 3, said first transverse sealing unit 6 comprises a support frame 14, a first 7 and a second 8 welding jaws movable on said support frame 14 to transversely seal the tubular film 3 along a first welding axis S1.

The first sealing unit 6 further comprises first transversal movement means 15 mounted on said support frame 14 and configured to move said first 7 and second 8 jaws towards and away from each other.

The first 7 and second 8 welding jaws are configured to be individually removable from the first sealing unit 6.

According to the invention, the vertical packaging machine 1 further comprises a second transverse sealing unit 9 configured as a removable independent module and provided with sliding means 21 configured to allow coupling of said second transverse sealing unit 9 to said support frame 14 of the first transversal sealing unit 6.

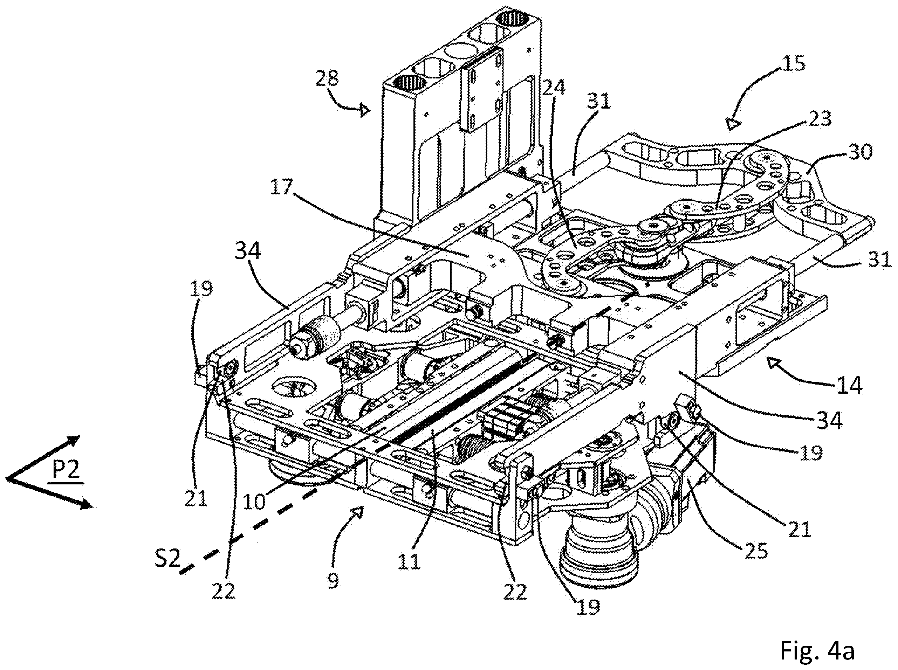

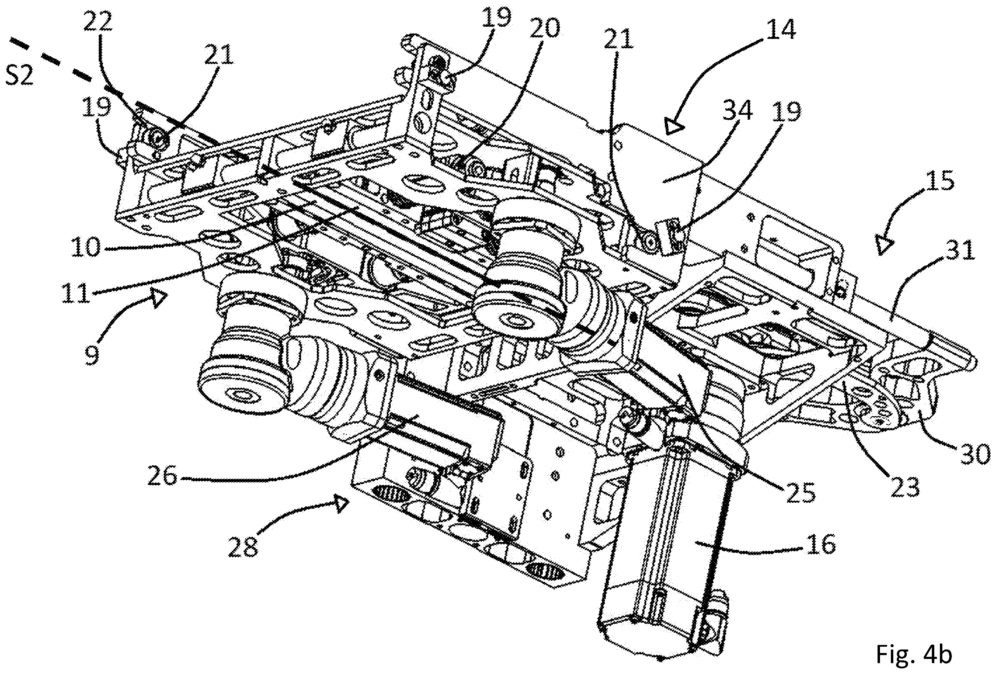

In particular, as shown in Figures 4a and 4b, said second transverse sealing unit 9 comprises a third 10 and a fourth 11 welding jaws movable towards and away from each other to transversely seal the film 3 along a second welding axis S2 which is perpendicular with respect to said first welding axis S1.

According to a specific configuration, the first welding axis S1 lies on a first welding plane P1 substantially perpendicular to said vertical feeding axis A. Said first welding plane P1 being placed downstream of said forming tube 5

The first transversal movement means 15 preferably comprise a mechanical connection unit 23, 24 driven by a motor 16 (see figure 3) and connected to said first welding jaw 7 and to said second welding jaw 8.

In the illustrated embodiment, the mechanical connection unit 23, 24 comprises a first connecting rod 23 and a second connecting rod 24 rotationally connected to the motor 16 via a rotating crank.

Alternatively, the mechanical connection unit 23, 24 can also be a belt, or chain mechanism, sliding guides or any kind of mechanical means known for transmitting motion.

The first connecting rod 23 is rotationally connected at an end thereof (opposite to the end connected to the rotating crank) to a central portion of an intermediate element 30.

Two parallel rods 31 are arranged spaced apart from each other and are fixed at two opposite ends of the intermediate element 30 and at the other two opposite ends to said first welding jaw 7.

Said rods 31 are configured to slide back and forth on a horizontal plane (corresponding to the welding plane P1) guided on said support frame 14.

The two parallel rods 31 performs a movement perpendicular to the first welding axis S1.

The second connecting rod 24 is rotationally connected at an end thereof (opposite to the end connected to the rotating crank) to a central portion of a pusher element 17 which is removably fixed to the second jaw 8.

Said pusher element 17 and said intermediate elements 30 are configured so that when said first motor 16 is operated, said first 7 and second 8 welding jaws are moved on said first welding plane P1.

As can be seen in figure 3, the pusher element 17 is placed between the first 7 and second 8 jaws on one side and the connection unit 23, 24 on the other side.

According to a specific embodiment, the first transverse sealing unit 6 of the vertical packaging machine 1 further comprises a pair of opposite arms 34 arranged cantilevered and parallel to each other, wherein each arm 34 has holding means 18 configured to accommodate the sliding means 21 of said second transverse sealing unit 9.

In particular, the pair of opposite arms 34 defines a space therebetween in which the first 7 and second 8 welding jaws are movable to seal the film 3 along the second welding axis S2.

In the depicted example, these holding means 18 are configured as recesses and the sliding means 21 as rollers 21, which enter the recesses allowing the second transverse sealing unit 9 to be coupled to the support frame 14 of the first transverse sealing unit 6.

Preferably each arm 34 of the support frame 14 comprises a pair of holding means 18.

As can be seen in figure 3, these arms 34 of the support frame 14 are arranged substantially horizontally, furthermore, the holding means 18 are arranged at the end of a respective rectilinear guide 22, so that said second transverse sealing unit 9 can be coupled to the support frame 14 by a rectilinear translation of said sliding means 21 along a substantially horizontal axis. In this way, the assembling can be carried out by using a trolley having a support configured to hold said second transverse sealing unit 9 so that the sliding means 21 are at the same height as the rectilinear guides 22 during the coupling of the second transverse sealing unit 9 to the support frame 14.

In order to block the second transverse sealing unit 9 on said pair of opposite arms 34, locking means 19 can be activated to lock said second sealing unit 9 on said opposite arms 34 and/or other portions of the support frame 14.

Said locking means 19 can be provided on said first sealing unit 6 and/or said second sealing unit 9.

The third 10 and fourth 11 welding jaws of the second transverse sealing unit 9 are arranged at 90° of rotating with respect to the first 7 and second 8 welding jaws, so that said second welding axis S2 is perpendicular to said first welding axis S1.

According to one embodiment, the second sealing unit 9 comprises preferably second transversal movement means 20, different from the first transversal movement means 15 and configured to move said third 10 and fourth 11 welding jaws towards and away from each other.

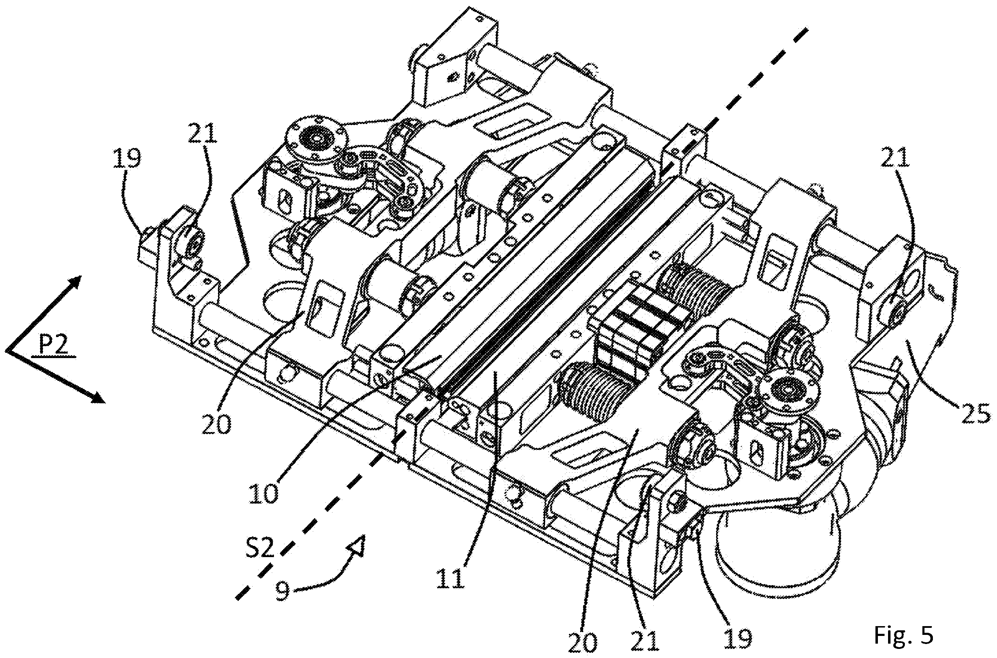

According to a specific configuration, once said second sealing unit 9 is mounted and locked on said support frame 14 of said first sealing unit 6, said second welding axis S2 lies on a second sealing plane P2 (Figg. 4a, 5 and 6), which is substantially parallel to said first sealing plane P1. Said second welding plane P2 being placed downstream of said first welding plane P1.

Basically, according to this configuration, said first 7 and second 8 welding jaws move to weld film 3 on a first plane P1 while said third 10 and fourth 11 welding jaws move to weld film 3 on a second plane P2 which is different from the first plane P1, in which the first plane P1 is arranged above the second plane P2 with respect to the vertical feeding axis A.

According to a specific configuration, the second sealing unit 9 can be made operational on the machine 1 once the sliding means 21 have been accommodated in the holding means 18 and then secured on the support frame 14 by said locking means 19. This assembling operation should be performed after said first jaw 7 and said second jaw 8 have been removed from said first transverse sealing unit 6.

According to a specific configuration said second transversal movement means 20 are driven by a second motor 25 and a third motor 26 configured to move said third 10 and said fourth 11 welding jaws respectively.

According to an embodiment, the first motor 16 remains positioned on the first transverse sealing unit 6 even when the second transverse sealing unit 9 is coupled and locked to the support frame 14.

Preferably, the second motor 25 and the third motor 26 are preferably mounted on board to the second transverse sealing unit 9.

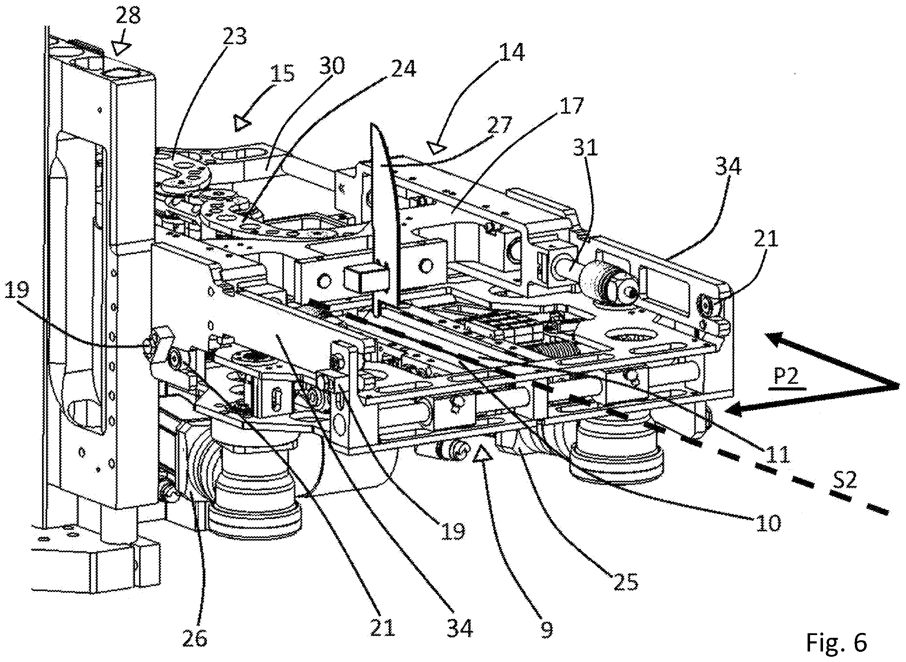

According to embodiments and as depicted in Figure 6, when the first and second jaws 7, 8 are removed from the first sealing unit 6, and the second sealing unit 9 is coupled to the support frame 14, a folding member 27 can be attached to the pusher element 17 to cooperate with said tubular film 3 coming from the forming tube 5 so as to create a fold on the film 3. The folding member 27 is therefore actuated by said first transverse movement means 15.

The folding member 27 is moved along a direction parallel to said second welding axis S2 when said second transversal movement means 20 moves said third 10 and fourth 11 jaws to perform the welding of the tubular film 3 along said second welding axis S2.

According to a particular embodiment, the folding member 27 is configured to alternatively assume a first backward position in which it is removed from said film 3 and a second forward position in which it intercepts the film 3 to create a fold on it.

More specifically, the folding member 27 intercepts the film 3 descending from the forming tube 5 to make it assume a specific conformation before the film 3 is welded transversally by the third 10 and fourth 11 jaws.

According to a further embodiment, the machine 1 comprises a control unit 29, visible in Figure 1, configured to automatically recognise the jaws mounted on the machine. More specifically, the control unit 29 automatically recognises the operating configuration of the machine 1 according to the presence of the jaws 7, 8 of the first transverse sealing unit 6 and/or the jaws 10, 11 of the second transverse sealing unit 9.

According to this embodiment, the control unit 29 is preferably connected to said second transversal movement means 20 and programmed to allow said third 10 and fourth 11 welding jaws to be moved only when the second transverse sealing unit 9 is locked to said first transverse sealing unit 6.

According to a further embodiment, said control unit 29 is further programmed to allow said third 10 and fourth 11 welding jaw to be moved only when said first 7 and second 8 welding jaw are removed from said first transverse sealing unit 6.

According to a specific embodiment, the recognition of the specific jaws of the first 6 and second 9 transverse sealing units may result in the control unit modifying certain operating parameters of the machine 1. The modified parameters may include: film 3 sliding speed, pressure force of the welding jaws, operating temperature of the welding jaws.

By way of example, for use of the vertical packaging machine 1 for making pillow bags, only the first 7 and second 8 jaws of the first transverse sealing unit 6 are used; while for making doy bags (stand-up pouches), the third 10 and fourth 11 jaws of the second transverse sealing unit 9 are used with the folding member 27, with said first 7 and second 8 jaws of the first transverse sealing unit 6 removed.

In a third configuration of use, both the first 7 and second 8 jaws of the first transverse sealing unit 6 and the third 10 and fourth 11 jaws of the second transverse sealing unit 9, without the folding member 27, can be used to make tetrahedral bags.

According to a preferred embodiment, the vertical packaging machine 1 further comprises longitudinal movement means 28 configured to move said first transverse sealing unit 6 along a sliding axis which is parallel to said vertical feeding axis A, while the first 7 and second 8, or the third 10 and fourth 11 welding jaws are moved to seal the film 3.

Preferably, said longitudinal movement means 28 comprise at least one guide along which the support frame 14 is moved.

This last configuration allows for continuous operation, without the need to stop the flow of the film 3, allowing the first 7 and second 8 jaws or the third 10 and fourth 11 jaws to perform their respective transverse sealing for a predetermined sealing time. This is possible by moving, by means of said longitudinal movement means 28, the support frame 14 along an axis parallel to the feed axis A of the film 3.

The longitudinal movement means 28 are configured to move the support frame 14 according to a first longitudinal movement from a position closer to the forming tube 5 to a distal position further away from the forming tube 5. During this first longitudinal movement, said first jaw 7 and second jaw 8 or said third 10 and fourth 11 jaws are configured to be respectively approached in a welding position.

The longitudinal movement means 28 are further configured to move the support frame 14 according to a second longitudinal movement from said distal position to said closer position. During this second longitudinal movement, said first 7 and second 8 jaw or said third 10 and fourth 11 jaws are configured to be respectively spaced in an open position.

As is clear from the description, in all forms of construction, the second transverse sealing unit 9 is configured as an autonomous removable module.

It is clear that modifications and/or additions of parts may be made to the vertical packaging machine described herein, without departing from the scope of the present invention as defined by the claims.

In the following claims, the references in brackets are for the sole purpose of facilitating reading and should not be considered limiting the scope of protection.

## Claims

1. Vertical packaging machine (1) for packaging products in bags, said machine comprising:
- conveying means (2) configured to convey a film (3) of wrapping material coming from a feeding reel (4) to a forming tube (5) developing along a vertical feeding axis (A);
- a first transverse sealing unit (6) arranged below said forming tube (5) and configured to receive said film (3) which has been previously sealed along its longitudinal edges, said first transverse sealing unit (6) comprising a support frame (14), a first (7) and a second welding jaws (8) movable on said support frame (14) to transversely seal the film (3) along a first welding axis (S1), and first transversal movement means (15) mounted on said support frame (14) and configured to move said first (7) and second (8) welding jaws towards and away from each other;
said machine further comprising a second transverse sealing unit (9), said second transverse sealing unit (9) comprising a third (10) and a fourth (11) welding jaws movable towards and away from each other to transversely seal the film (3) along a second welding axis (S2) which is perpendicular with respect to said first welding axis (S1), said machine being **characterized in that** said first (7) and second (8) welding jaws are configured to be individually removable from the first sealing unit (6), and **in that** said second transverse sealing unit (9) is configured as a removable independent module and provided with sliding means (21) configured to allow coupling of said second transverse sealing unit (9) to said support frame (14) of the first transversal sealing unit (6).

2. Vertical packaging machine (1) as in claim 1, wherein the support frame (14) comprises a pair of opposite arms (34) arranged cantilevered and parallel to each other, each arm (34) having holding means (18) configured to accommodate said sliding means (21) of said second transverse sealing unit (9), said pair of opposite arms (34) defining a space therebetween in which the first (7) and second (8) welding jaws are movable to seal the film (3) along the second welding axis (S2).

3. Vertical packaging machine (1) as in claim 2, further comprising locking means (19) configured to be activated to block the second transverse sealing unit (9) on said pair of opposite arms (34).

4. Vertical packaging machine (1) as in claim 2 or 3, wherein said holding means (18) comprises a respective rectilinear guide (22).

5. Vertical packaging machine (1) as in claim 4, wherein each rectilinear guide (22) extends along a substantially horizontal axis, so that said second transverse sealing unit (9) can be coupled to the machine (1) by means of a rectilinear translation of said sliding means (21) of said second transverse sealing unit (9) on a substantially horizontal plane.

6. Vertical packaging machine (1) as in any one of the preceding claims, wherein said first transversal movement means (15) comprise a mechanical connection unit (23, 24) connected to said first welding jaw (7) by intermediate elements (30) and to said second welding jaw (8) by a pusher element (17).

7. Vertical packaging machine (1) as in claim 6, wherein said pusher element (17) and said intermediate elements (30) are driven by a first motor (16) mounted on said first transverse sealing unit (6).

8. Vertical packaging machine (1) as in claim 6 or 7, further comprising a folding member (27) fixed to said pusher element (17) when the second transverse sealing unit (9) is coupled to said frame (14), said folding member (27) being configured to cooperate with said film (3) coming from the forming tube (5), so as to create a fold on the film (3), said folding member (27) being operated by said first transversal movement means (15).

9. Vertical packaging machine (1) as in any one of the preceding claims, wherein said second transverse sealing unit (9) further comprises second transversal movement means (20) different from said first transversal movement means (15) and configured to move said third (10) and fourth (11) welding jaws towards and away from each other.

10. Vertical packaging machine (1) as in claim 9, wherein said second transversal movement means (20) are operated by a second motor (25) and a third motor (26) configured to respectively move said third (10) and said fourth (11) welding jaws.

11. Vertical packaging machine (1) as in claim 10, wherein said second and third motors (25, 26) are mounted on said second transverse sealing unit (9).

12. Vertical packaging machine (1) as in claim 9, 10 or 11, further comprising a control unit (29) connected to said second transversal movement means (20) and programmed to allow said third (10) and fourth (11) welding jaw (11) to be moved only when the second transverse sealing unit (9) is locked to said first transverse sealing unit (6).

13. Vertical packaging machine (1) as in claim 12, wherein said control unit (29) is further programmed to allow said third (10) and fourth (11) welding jaw to be moved only when said first (7) and second (8) welding jaws are removed from said first transverse sealing unit (6).

14. Vertical packaging machine (1) as in any one of the preceding claims, wherein said first (7) and second (8) welding jaws move to seal the film (3) on a first plane (P1) while said third (10) and fourth (11) welding jaws move to seal the film (3) on a second plane (P2) which is different form the first plane (P1), said first plane (P1) being arranged above said second plane (P2) with respect to the vertical feeding axis (A).

15. Vertical packaging machine (1) as in any one of the preceding claims, further comprising longitudinal movement means (28) configured to move said first transversal sealing unit (6) along a sliding axis which is parallel to said vertical feeding axis (A), while said first (7) and second (8), or said third (10) and fourth (11) welding jaws are moved to seal the film (3).

## Patentansprüche

1. Vertikale Verpackungsmaschine (1) zum Verpacken von Produkten in Beuteln, die Maschine umfassend:
- Fördermittel (2), die konfiguriert sind, um eine von einer Zuführspule (4) kommende Folie (3) eines Verpackungsmaterials zu einem Formrohr (5) zu fördern, das entlang einer vertikalen Zuführachse (A) ausgebildet ist;
- eine erste Querversiegelungseinheit (6), die unter dem Formrohr (5) angeordnet und konfiguriert ist, um die Folie (3) aufzunehmen, die zuvor entlang ihrer Längskanten versiegelt wurde, die erste Querversiegelungseinheit (6) umfassend einen Stützrahmen (14), eine erste (7) und eine zweite Schweißbacke (8), die auf dem Stützrahmen (14) bewegbar sind, um die Folie (3) entlang einer ersten Schweißachse (S1) quer zu versiegeln, und erste Querbewegungsmittel (15), die an dem Stützrahmen (14) montiert und konfiguriert sind, um die erste (7) und die zweite (8) Schweißbacke aufeinander zu und voneinander weg zu bewegen;
die Maschine ferner umfassend eine zweite Querversiegelungseinheit (9), die zweite Querversiegelungseinheit (9) umfassend eine dritte (10) und eine vierte (11) Schweißbacke, die aufeinander zu und voneinander weg bewegbar sind, um die Folie (3) entlang einer zweiten Schweißachse (S2), die in Bezug auf die erste Schweißachse (S1) senkrecht ist, quer zu versiegeln, wobei die Maschine **dadurch gekennzeichnet ist, dass** die erste (7) und die zweite (8) Schweißbacke konfiguriert sind, um einzeln von der ersten Versiegelungseinheit (6) entfernbar zu sein, und **dadurch, dass** die zweite Querversiegelungseinheit (9) als ein entfernbares unabhängiges Modul konfiguriert ist und mit Gleitmitteln (21) versehen ist, die konfiguriert sind, um ein Koppeln der zweiten Querversiegelungseinheit (9) mit dem Stützrahmen (14) der ersten Querversiegelungseinheit (6) zu ermöglichen.

2. Vertikale Verpackungsmaschine (1) nach Anspruch 1, wobei der Stützrahmen (14) ein Paar gegenüberliegender Arme (34) umfasst, die auskragend und parallel zueinander angeordnet sind, wobei jeder Arm (34) Haltemittel (18) aufweist, die konfiguriert sind, um die Gleitmittel (21) der zweiten Querversiegelungseinheit (9) unterzubringen, wobei das Paar gegenüberliegender Arme (34) einen Raum dazwischen definiert, in dem die erste (7) und die zweite (8) Schweißbacke bewegbar sind, um die Folie (3) entlang der zweiten Schweißachse (S2) zu versiegeln.

3. Vertikale Verpackungsmaschine (1) nach Anspruch 2, ferner umfassend Verriegelungsmittel (19), die konfiguriert sind, um aktiviert zu werden, um die zweite Querversiegelungseinheit (9) an dem Paar gegenüberliegender Arme (34) zu blockieren.

4. Vertikale Verpackungsmaschine (1) nach Anspruch 2 oder 3, wobei die Haltemittel (18) eine jeweilige geradlinige Führung (22) umfassen.

5. Vertikale Verpackungsmaschine (1) nach Anspruch 4, wobei jede geradlinige Führung (22) sich entlang einer im Wesentlichen horizontalen Achse erstreckt, so dass die zweite Querversiegelungseinheit (9) mittels einer geradlinigen Verschiebung der Gleitmittel (21) der zweiten Querversiegelungseinheit (9) auf einer im Wesentlichen horizontalen Ebene mit der Maschine (1) gekoppelt werden kann.

6. Vertikale Verpackungsmaschine (1) nach einem der vorstehenden Ansprüche, wobei die ersten transversalen Bewegungsmittel (15) eine mechanische Verbindungseinheit (23, 24) umfassen, die durch Zwischenelemente (30) mit der ersten Schweißbacke (7) und durch ein Schieberelement (17) mit der zweiten Schweißbacke (8) verbunden ist.

7. Vertikale Verpackungsmaschine (1) nach Anspruch 6, wobei das Schieberelement (17) und die Zwischenelemente (30) durch einen ersten Motor (16) angetrieben werden, der an der ersten Querversiegelungseinheit (6) montiert ist.

8. Vertikale Verpackungsmaschine (1) nach Anspruch 6 oder 7, ferner umfassend ein Faltglied (27), das an dem Schieberelement (17) fixiert ist, wenn die zweite Querversiegelungseinheit (9) mit dem Rahmen (14) gekoppelt ist, wobei das Faltglied (27) konfiguriert ist, um mit der von dem Formrohr (5) kommenden Folie (3) zusammenzuwirken, um eine Falte auf der Folie (3) zu erzeugen, wobei das Faltglied (27) durch die ersten transversalen Bewegungsmittel (15) betrieben wird.

9. Vertikale Verpackungsmaschine (1) nach einem der vorstehenden Ansprüche, wobei die zweite Querversiegelungseinheit (9) ferner zweite Querbewegungsmittel (20) umfasst, die sich von den ersten Querbewegungsmitteln (15) unterscheiden und konfiguriert sind, um die dritte (10) und die vierte (11) Schweißbacke aufeinander zu und voneinander weg zu bewegen.

10. Vertikale Verpackungsmaschine (1) nach Anspruch 9, wobei die zweiten transversalen Bewegungsmittel (20) durch einen zweiten Motor (25) und einen dritten Motor (26) betrieben werden, die konfiguriert sind, um die dritte (10) und die vierte (11) Schweißbacke jeweils zu bewegen.

11. Vertikale Verpackungsmaschine (1) nach Anspruch 10, wobei der zweite und der dritte Motor (25, 26) an der zweiten Querversiegelungseinheit (9) montiert sind.

12. Vertikale Verpackungsmaschine (1) nach Anspruch 9, 10 oder 11, ferner umfassend eine Steuereinheit (29), die mit den zweiten Querbewegungsmitteln (20) verbunden und programmiert ist, um der dritten (10) und der vierten (11) Schweißbacke (11) zu ermöglichen, nur bewegt zu werden, wenn die zweite Querversiegelungseinheit (9) mit der ersten Querversiegelungseinheit (6) verriegelt ist.

13. Vertikale Verpackungsmaschine (1) nach Anspruch 12, wobei die Steuereinheit (29) ferner programmiert ist, um der dritten (10) und der vierten (11) Schweißbacke zu ermöglichen, nur bewegt zu werden, wenn die erste (7) und die zweite (8) Schweißbacke von der ersten Querversiegelungseinheit (6) entfernt sind.

14. Vertikale Verpackungsmaschine (1) nach einem der vorstehenden Ansprüche, wobei sich die erste (7) und die zweite (8) Schweißbacke bewegen, um die Folie (3) auf einer ersten Ebene (P1) zu versiegeln, während sich die dritte (10) und die vierte (11) Schweißbacke bewegen, um die Folie (3) auf einer zweiten Ebene (P2) zu versiegeln, die sich von der ersten Ebene (P1) unterscheidet, wobei die erste Ebene (P1) in Bezug auf die vertikale Zuführachse (A) über der zweiten Ebene (P2) angeordnet ist.

15. Vertikale Verpackungsmaschine (1) nach einem der vorstehenden Ansprüche, ferner umfassend Längsbewegungsmittel (28), die konfiguriert sind, um die erste Querversiegelungseinheit (6) entlang einer Gleitachse zu bewegen, die parallel zu der vertikalen Zuführachse (A) ist, während die erste (7) und die zweite (8) oder die dritte (10) und die vierte (11) Schweißbacke bewegt werden, um die Folie (3) zu versiegeln.

## Revendications

1. Machine d'emballage vertical (1) destinée à emballer des produits dans des sacs, ladite machine comprenant :
- un moyen d'acheminement (2) conçu pour acheminer un film (3) de matériau d'emballage provenant d'une bobine d'alimentation (4) vers un tube de formage (5) se développant le long d'un axe d'alimentation vertical (A) ;
- une première unité de scellage transversal (6) agencée en dessous dudit tube de formage (5) et conçue pour recevoir ledit film (3) qui a été préalablement scellé le long de ses bords longitudinaux, ladite première unité de scellage transversal (6) comprenant un cadre (14) de support, une première (7) et une deuxième mâchoires de soudage (8) mobiles sur ledit cadre (14) de support pour sceller transversalement le film (3) le long d'un premier axe de soudage (S1), et ledit premier moyen de déplacement transversal (15) monté sur ledit cadre (14) de support et conçu pour rapprocher et éloigner lesdites première (7) et deuxième (8) mâchoires de soudage l'une de l'autre ;
ladite machine comprenant en outre une seconde unité de scellage transversal (9), ladite seconde unité de scellage transversal (9) comprenant des troisième (10) et quatrième (11) mâchoires de soudage mobiles l'une vers l'autre et à l'écart l'une de l'autre pour sceller transversalement le film (3) le long d'un second axe de soudage (S2) qui est perpendiculaire par rapport audit premier axe de soudage (S1), ladite machine étant **caractérisée en ce que** lesdites première (7) et deuxième (8) mâchoires de soudage sont conçues pour être individuellement amovibles de la première unité de scellage (6), et **en ce que** ladite seconde unité de scellage transversal (9) est conçue comme un module indépendant amovible et pourvue d'un moyen de coulissement (21) conçu pour permettre l'accouplement de ladite seconde unité de scellage transversal (9) audit cadre (14) de support de la première unité de scellage transversal (6).

2. Machine d'emballage vertical (1) selon la revendication 1, dans laquelle le cadre (14) de support comprend une paire de bras (34) opposés disposés en porte-à-faux et parallèles l'un à l'autre, chaque bras (34) présentant un moyen de maintien (18) conçu pour recevoir ledit moyen de coulissement (21) de ladite seconde unité de scellage transversal (9), ladite paire de bras (34) opposés définissant un espace entre eux dans lequel les première (7) et deuxième (8) mâchoires de soudage sont mobiles pour sceller le film (3) le long du second axe de soudage (S2).

3. Machine d'emballage vertical (1) selon la revendication 2, comprenant en outre un moyen de verrouillage (19) conçu pour être activé pour bloquer la seconde unité de scellage transversal (9) sur ladite paire de bras (34) opposés.

4. Machine d'emballage vertical (1) selon la revendication 2 ou 3, dans laquelle ledit moyen de maintien (18) comprend un guide rectiligne (22) respectif.

5. Machine d'emballage vertical (1) selon la revendication 4, dans laquelle chaque guide rectiligne (22) s'étend le long d'un axe sensiblement horizontal, de sorte que ladite seconde unité de scellage transversal (9) puisse être accouplée à la machine (1) au moyen d'une translation rectiligne desdits moyens de coulissement (21) de ladite seconde unité de scellage transversal (9) sur un plan sensiblement horizontal.

6. Machine d'emballage vertical (1) selon l'une quelconque des revendications précédentes, dans laquelle lesdits premiers moyens de déplacement transversal (15) comprennent une unité de liaison mécanique (23, 24) reliée à ladite première mâchoire de soudage (7) par des éléments intermédiaires (30) et à ladite deuxième mâchoire de soudage (8) par un élément poussoir (17).

7. Machine d'emballage vertical (1) selon la revendication 6, dans laquelle ledit élément poussoir (17) et lesdits éléments intermédiaires (30) sont entraînés par un premier moteur (16) monté sur ladite première unité de scellage transversal (6).

8. Machine d'emballage vertical (1) selon la revendication 6 ou 7, comprenant en outre un élément de pliage (27) fixé audit élément poussoir (17) lorsque la seconde unité de scellage transversal (9) est accouplée audit cadre (14), ledit élément de pliage (27) étant conçu pour coopérer avec ledit film (3) provenant du tube de formage (5), de manière à créer un pli sur le film (3), ledit élément de pliage (27) étant actionné par ledit premier moyen de déplacement transversal (15).

9. Machine d'emballage vertical (1) selon l'une quelconque des revendications précédentes, dans laquelle ladite seconde unité de scellage transversal (9) comprend en outre un second moyen de déplacement transversal (20) différent dudit premier moyen de déplacement transversal (15) et conçu pour rapprocher et éloigner lesdites troisième (10) et quatrième (11) mâchoires de soudage l'une de l'autre.

10. Machine d'emballage vertical (1) selon la revendication 9, dans laquelle ledit second moyen de déplacement transversal (20) est actionné par un deuxième moteur (25) et un troisième moteur (26) conçus pour déplacer respectivement lesdites troisième (10) et quatrième (11) mâchoires de soudage.

11. Machine d'emballage vertical (1) selon la revendication 10, dans laquelle lesdits deuxième et troisième moteurs (25, 26) sont montés sur ladite seconde unité de scellage transversal (9).

12. Machine d'emballage vertical (1) selon la revendication 9, 10 ou 11, comprenant en outre une unité de commande (29) connectée audit second moyen de déplacement transversal (20) et programmée pour permettre auxdites troisième (10) et quatrième (11) mâchoires de soudage (11) d'être déplacées uniquement lorsque la seconde unité de scellage transversal (9) est verrouillée à ladite première unité de scellage transversal (6).

13. Machine d'emballage vertical (1) selon la revendication 12, dans laquelle ladite unité de commande (29) est en outre programmée pour permettre auxdites troisième (10) et quatrième (11) mâchoires de soudage d'être déplacées uniquement lorsque lesdites première (7) et deuxième (8) mâchoires de soudage sont retirées de ladite première unité de scellage transversal (6).

14. Machine d'emballage vertical (1) selon l'une quelconque des revendications précédentes, dans laquelle lesdites première (7) et deuxième (8) mâchoires de soudage se déplacent pour sceller le film (3) sur un premier plan (P1) tandis que lesdites troisième (10) et quatrième (11) mâchoires de soudage se déplacent pour sceller le film (3) sur un second plan (P2) qui est différent du premier plan (P1), ledit premier plan (P1) étant agencé au-dessus dudit second plan (P2) par rapport à l'axe d'alimentation vertical (A).

15. Machine d'emballage vertical (1) selon l'une quelconque des revendications précédentes, comprenant en outre un moyen de déplacement longitudinal (28) conçu pour déplacer ladite première unité de scellage transversal (6) le long d'un axe de coulissement qui est parallèle audit axe d'alimentation vertical (A), pendant que lesdites première (7) et deuxième (8), ou lesdites troisième (10) et quatrième (11) mâchoires de soudage sont déplacées pour sceller le film (3).
